Europäisches Patentamt

European Patent Office

Office européen des brevets

(11) Publication number: **0 111 604 B2**

(12) # NEW EUROPEAN PATENT SPECIFICATION

(45) Date of publication of the new patent specification : **27.12.91 Bulletin 91/52**

(51) Int. Cl.$^5$ : **H04B 3/54**

(21) Application number : **82306747.5**

(22) Date of filing : **17.12.82**

(54) Transmitter/receiver circuit pair for signal transmission over power wiring.

(43) Date of publication of application :
**27.06.84 Bulletin 84/26**

(45) Publication of the grant of the patent :
**16.06.87 Bulletin 87/25**

(45) Mention of the opposition decision :
**27.12.91 Bulletin 91/52**

(84) Designated Contracting States :
**DE FR GB IT**

(56) References cited :
**DE-A- 1 922 439
DE-A- 2 358 003
FR-A- 1 418 591
US-A- 2 282 968
US-A- 3 909 821
U.Tietze, Ch. Schenk,
"Halbleiterschaltungstechnik, 5.Auflage,
Springer Verl. 1980,S.188, 346 ff."
A.I. Zvereo "Handbook of Filter Synthesis",
J.Wileyand sous Inc,1967**

(73) Proprietor : **SHARP KABUSHIKI KAISHA
22-22 Nagaike-cho Abeno-ku
Osaka 545 (JP)**

(72) Inventor : **Ise, Masahiro
2187-A18-203 Mise-cho
Kashihara-shi Nara-ken (JP)**
Inventor : **Machino, Katsuyuki
1-31-101 Higashikidera-cho
Nara-shi Nara-ken (JP)**
Inventor : **Tanaka, Hidehiko
2613-1 Ichinomoto-cho
Tenri-shi Nara-ken (JP)**
Inventor : **Matsubara, Toshiyuki
2613-1 Ichinomoto-cho
Tenri-shi Nara-ken (JP)**

(74) Representative : **Wright, Peter David John et al
R.G.C. Jenkins & Co. 26 Caxton Street
London SW1H 0RJ (GB)**

EP 0 111 604 B2

## Description

The present invention relates to a transmitter receiver circuit pair for signal transmission over power wiring.

In the transmitting section of power wiring transmission, the lower the output impedance the better for effective superimposing of signals on the distribution line. However, low impedance loads must be prevented from remaining on the distribution line and carrier leakages due to the effects of high level noise (thyristor noise etc.) on the input side must also be prevented during transmission breaks. The higher the input impedance the better from the standpoint of the receiving section to prevent drops in signal level at the receiving point and also to prevent loading when a number of receiving units are connected.

US 3,909,821 discloses a system for communicating over power lines the transmitter comprising a circuit in which the output of a sine wave oscillator is fed to an electronic switch and this output is then fed to a distribution line through a series resonant circuit after passing through a step-down transformer.

However, typical electronic switches in such a transmitter/circuit are susceptible to noise superimposed on the distribution line which is stepped up by the transformer. According to the present invention there is provided a transmitter preciser circuit pair as claimed in claim 1.

The transmitter/receiver circuit pair of the present invention alleviates the above problem of noise on the distribution line because the photocoupler isolates the base of the emitter follower.

The transmitter/receiver circuit pair of the present invention has the further advantage that the filter characteristics of the resonant circuits of the receiving section are improved by the series and parallel impedance-matching resistors.

Embodiments of the invention will now be described by way of example only with reference to Figures 1 to 6 of the accompanying drawings, of which:

Figure 1 is a circuit diagram of a transmitter circuit in a transmitter/receiver circuit pair in accordance with the invention;

Figures 2(a) and (b) are time charts showing examples of various types of noise;

Figures 3(a) and (b) are diagrams showing alternatives to photocoupler 2 in Figure 1;

Figure 4 is a diagram showing an example of the filter circuit in the receiver unit of a transmitter/receiver circuit pair in accordance with the invention;

Figure 5 is a diagram showing an example of the filter of Figure 4, inductance-coupled to increase the level, and

Figure 6 is a block diagram showing in outline the receiving system of a transmitter/receiver circuit pair accordance with the invention.

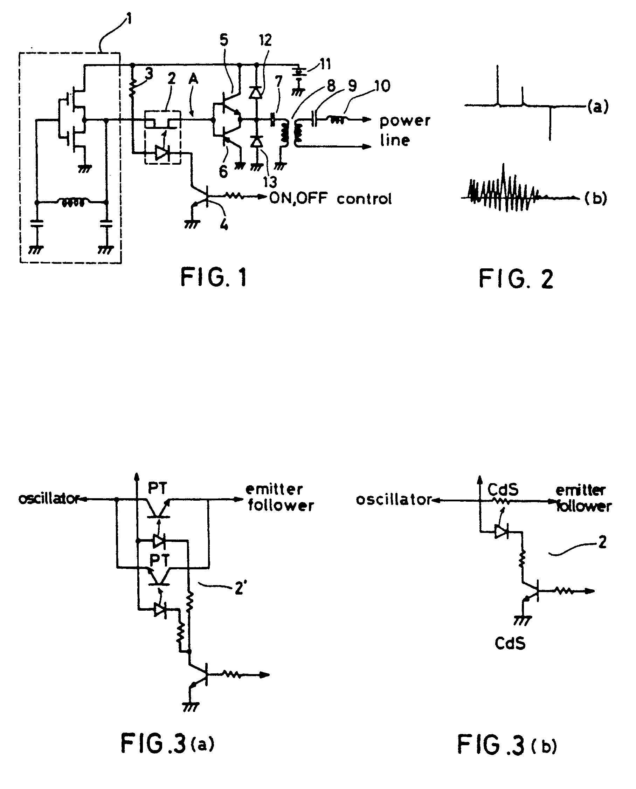

We shall first start by describing the transmitter. Figure 1 is the electrical circuit of the transmitter. The circuit includes sine wave oscillator circuit 1, photocoupler (2-directional FET type) 2, current limiting resistor 3 for the photocoupler LED, transistor 4 that controls the LED by an ON-OFF signal from the control section (microcomputer etc.), emitter-follower transistors 5 and 6 for lowering the impedance, decoupling capacitor 7, step-down transformer 8 (n:1) to further lower impedance, series resonance circuits 9 and 10 to isolate the distribution line voltage and feed the carrier to the distribution line at a low impedance, power supply 11, and high level distribution line noise suppression diodes 12 and 13.

Although the output impedance of normal transistor emitter-followers (5 and 6 in the diagram) is about 15 ohm, this is not satisfactory, as the distribution line impedance is only about 2 to 5 ohm. Step-down transformer 8 is therefore inserted between the emitter-follower and the distribution line and the desired impedance obtained by setting the output impedance to $1/n^2$ (n is the turns ratio). However, it will be necessary to generate a signal of n times the final level with the sine wave oscillator circuit for the output voltage to also be 1/n. However, it will serve no purpose even if the impedance is lowered up to stepdown transformer 8 if the impedance at the connection to the distribution line is high. For this reason capacitor 9 and coil 10 are inserted in the form of a series resonance circuit at the connection where only a capacitor is used normally. Although operation during transmission is as explained above, consideration will also be necessary for transmission breaks. As various devices are generally connected to the distribution line, various type of noise will be mixed on the line. The principal types will be thyristor noise (Fig. 2(a)) and motor brush noise (vacuum cleaners etc., Fig. 2(b)). These noise levels reach a maximum of $30V_{pp}$ for thyristor and $2V_{pp}$ for vacuum cleaners. These noise frequencies pass through the series resonance circuit 9, 10 and are added to the base of emitter-follower 5, 6 after being stepped up through transformer 8.

However, as photocoupler 2 acts as an isolating analog switch, the emitter-follower will be in a completely isolated OFF state and will therefore not load the distribution line as its output impedance is high. Although the secondary impedance of step-down transformer 8 will be the direct load during the OFF state, there will therefore be practically no problem if a sufficiently high impedance (over 1 mH) is selected. Also, as the control of the analog switch is completely isolated from the switch, there will be no adverse effects even if there is line noise present on the base.

As the switch and control parts are not completely isolated in normal analog switches (transistors FET's CMOS's etc.), in essence, carrier leakage to the distribution line will occur for OFF commands issued by the control section when the level at point A (base of emitter-follower 5, 6) becomes momentarily high or low. If point A is grounded through a resistor or capacitor in an attempt to prevent this, a low impedance load will be presented to the distribution line as emitter-follower 5, 6 will not be completely isolated. As each power wiring transmission section is normally made up of a transmitter/receiver pair, the load applied even during OFF periods of the transmitter when a large number of units are connected for an answer back service on the assumption of improved reliability is highly undesirable. This invention completely resolves these problems.

Instead of the 2-way FET shown in Figure 1, photo transistors (2 sets used to obtain 2-way characteristics) connected as shown in Figure 3(a) and (b) and CDS can also be used for photocoupler 2. Photothyristors are not suitable as they are turned ON easily but require additional circuitry to turn OFF and switching speed is slow.

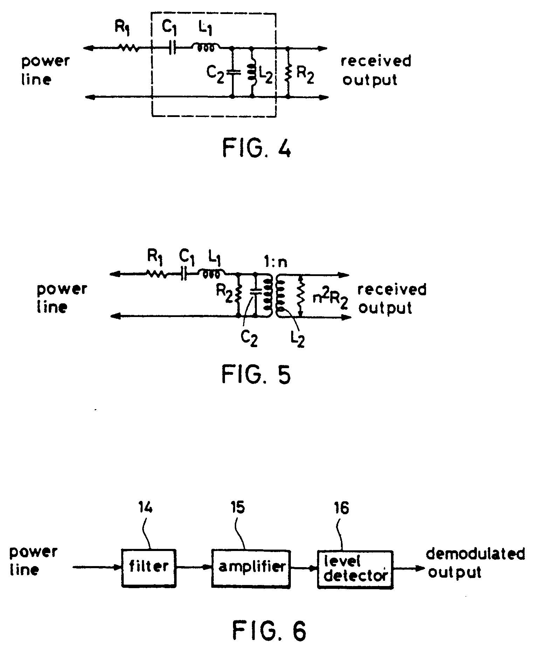

We shall now explain the receiving section. In power wiring transmission using an AM system, data transmission is carried out by turning a special carrier frequency ON and OFF. To block the distribution line voltage and effectively remove the noise elements, the narrower the band width of the filter used the better the results. The higher the input impedance the better at the receiving point to prevent attenuation of the signal and to prevent loading when a number of receiving circuits are connected. Although a signal tuning circuit is normally used in this section, this will not be suitable here considering the foregoing problems. As shown in Figure 4, this example uses a series resonance circuit composed of capacitor C1 and coil L1 as a filter at the connection to the distribution line and a parallel resonance circuit composed of capacitor C2 and coil L2 on the load side. If the circuit within the dotted lines in Figure 4 satisfies the following conditions, it can be treated a a constant-K filter and this simplifies design.

$$C_1 L_1 = C_2 L_2 \quad (1)$$

The various parameters of the filter may be obtained as follows. Characteristic impedance:

$$Z = \sqrt{\frac{L_1}{C_2}} \left( = \sqrt{\frac{L_2}{C_1}} \right) \quad (2)$$

Centre frequency:

$$f_0 = \frac{1}{2\pi\sqrt{L_1 C_1}} \left( = \frac{1}{2\pi\sqrt{L_2 C_2}} \right) \quad (3)$$

Bandwidth:

$$\Delta = \frac{Z}{L_1} \left( = \frac{1}{C_2 Z} \right) \quad (4)$$

The characteristic impedance determines the impedance at the input and output sections of the filter and can be arbitrarily selected by means of $C_1$, $C_2$, $L_1$ and $L_2$. However, if we select 1 k ohm for example to disregard the load effect, the anticipated filter characteristics will not be obtained as it will be extremely mismatched with a line impedance of only about 2 to 5 ohm. In this invention, resistors $R_1$ and $R_2$ have been inserted to match the input/out sections with the characteristic impedance. When $Z_0$.. distribution line impedance and also $Z_0$.. input impedance of the next stage (inputs to emitter-follower, MOS etc.), the following can be selected.

$$R_1 = R_2 = Z_0 \quad (5)$$

The receiving level in this condition will be 1/2 the level on the distribution line.

If a coil with ratio 1:n is added as shown in Figure 5 to isolate the portion following the output of the filter from the distribution line and also give additional voltage gain, a receiving line of n/2 will be realized. Although $R_2$ may be repositioned in the secondary at this time, its equivalent value must be $n^2 R_2$. Demodulation is carried out by means of an amplifier and level detector connected after the filter. In Figure 6, 14 is the filter, 15 the amplifer and 16 the level detector.

## Claims

1. A transmitter/receiver circuit pair for power wiring transmission, the transmitting section comprising a circuit in which the output of a sine wave oscillator (1) is fed to a distribution line through a series resonant circuit (9, 10) after passing through a step-down transformer (8), wherein a photocoupler-controlled switch (2) is connected to receive and control the feeding of said output, switch control means (3, 4, ON, OFF control) being provided for supplying a switch control signal to said switch (2), wherein after having passed the photocoupler-controlled switch (2) and before being fed to the step-down transformer (8) the output of the sine wave oscillator is fed to an emitter follower (5) which is electrically isolated by the photocoupler controlled switch from the switch control means and wherein the receiving section comprises a level detector (16), an amplifier (15) and a filter circuit (14), in which the signal from the distribution line is fed to a parallel resonant circuit (L₂, C₂) to which a first resistor (R₂) is connected in parallel, after passing through a series resonant circuit (L₁, C₁) to which a second resistor (R₁) is connected in series, the resistors matching the filter (14) to the power wiring output impedance and to the amplifier (15) input impedance and the respective centre frequencies of the resonant circuits of the receiving section being substantially identical.

2. A transmitter/receiver circuit pair as claimed in claim 1, wherein the series and parallel resonant circuits of said receiving section obey the relationship:

$$C_1 L_1 = C_2 L_2,$$

$L_1$, and $L_2$ being the inductances of the series and parallel resonant circuits respectively and $C_1$ and $C_2$ being the capacitances of the series and parallel resonant circuits respectively.

3. A transmitter/receiver circuit pair as claimed in claim 1 or claim 2, wherein said photocoupler (2) comprises an FET connected in series between the base of said emitter follower (5, 6) and said oscillator (1), further switching means (4) being coupled to a photodiode of said photocoupler and thereby arranged to modulate the output of said oscillator.

4. A transmitter/receiver circuit pair as claimed in claim 1 or claim 2, wherein said photocoupler (2) comprises a pair of reverse parallel connected bipolar phototransistors (PT) connected in series between said oscillator (1) and the base of said emitter follower (5, 6), respective photodiodes associated with said phototransistors being coupled to further switching means (4) which is arranged to modulate the output of said oscillator.

5. A transmitter/receiver circuit pair as claimed in claim 1 or claim 2, wherein said photocoupler (2) comprises a photosensitive resistance connected in series between said oscillator and the base of said emitter follower (5, 6), a photodiode being associated with said photosensitive resistance and connected to further switching means (4) which is arranged to modulate the output of said oscillator.

6. A transmitter/receiver circuit pair as claimed in any preceding claim, wherein said parallel resonant circuit (7, 8) comprises a stepdown transformer (8), the secondary of which is connected in series with the series resonant circuit ($C_1$, $L_1$) of said receiving section.

## Patentansprüche

1. Sender/ Empfänger-Schaltkreispaar zur Übertragung über eine Stromversorgungsleitung, bei dem der Sendeteil einen Schaltkreis enthält, bei dem der Ausgang eines Sinus-Oszillators (1) nach Durchlaufen eines Abwärtstransformators (8) über einen Serien-Resonanzkreis (9, 10) eine Verteilerleitung speist, bei dem ein Photokoppler-gesteuerter Schalter (2) das Ausgangssignal übernimmt und steuert, bei dem Schaltersteuermittel (3, 4, ON/OFF-control) vorgesehen sind, die den Schalter mit einem Schaltersteuersignal beaufschlagen, bei dem der Ausgang des Sinus-Oszillators nach Durchlaufen des Photokoppler-gesteuerten Schalters (2) und vor Einspeisung in den Abwärtstransformator (8) auf einen Emitterfolger (5) gelangt, der von den Schaltersteuermitteln durch den Photokoppler-gesteuerten Schalter elektrisch getrennt ist und bei dem der Empfangsteil einen Pegeldetektor (16), einen Verstärker (15) und einen Filterschaltkreis (14) enthält, bei dem das Signal von der Verteilerleitung einen Parallel-Resonanzkreis ($L_2$, $C_2$) speist, zu dem ein erster Widerstand ($R_2$) parallel geschaltet ist, danach einen Serien-Resonanzkreis ($L_1$, $C_1$) durchläuft, zu dem ein zweiter Widerstand ($R_1$) in Reihe liegt, wobei die Widerstände das Filter (14) auf die Ausgangsimpedanz der Stromversorgungsleitung und auf die Eingangsimpedanz des Verstärkers (15) anpassen, und wobei die jeweiligen Mittenfrequenzen der Resonanzkreise des Empfangsteils im wesentlichen identisch sind.

2. Sender/Empfänger-Schaltkreispaar nach Anspruch 1, **dadurch gekennzeichnet**, daß die Serien- und Parallel-Resonanzkreise des Empfangsteils folgende Gleichung erfüllen:

$$C_1 L_1 = C_2 L_2.$$

wobei $L_1$ und $L_2$ die Induktivitäten der Serien- bzw. Parallel-Resonanzkreise und $C_1$ und $C_2$ die Kapazitäten der Serien- bzw. Parallel-Resonanzkreise darstellen.

3. Sender/ Empfänger-Schaltkreispaar nach Anspruch 1 oder 2, **dadurch gekennzeichnet**, daß der Photokoppler (2) einen in Serie zwischen die Basis des Emitterfolgers (5, 6) und den Oszillator (1) geschalteten FET enthält, sowie weiterhin eine Schaltvorrichtung (4), die mit einer Photodiode des Photokopplers verbunden ist und dadurch den Ausgang des Oszillators moduliert.

4. Sender/Empfänger-Schaltkreispaar nach Anspruch 1 oder 2, **dadurch gekennzeichnet**, daß der Photokoppler (2) ein in Serie zwischen den Oszillator (1) und die Basis des Emitterfolgers (5, 6) geschaltetes Paar von antiparallel verbundenen bipolaren Phototransistoren (PT) enthält, wobei entsprechende, dem Phototransistor zugeordnete Photodioden weiterhin mit einer Schaltvorrichtung (4) verbunden und so angeordnet sind, daß der Ausgang des Oszillators moduliert wird.

5. Sender/ Empfänger-Schaltkreispaar nach Anspruch 1 oder 2, **dadurch gekennzeichnet**, daß der Photokoppler (2) einen in Serie zwischen dem Oszillator und der Basis des Emitterfolgers (5, 6) geschalteten Photowiderstand enthält, wobei dem Photowiderstand eine Photodiode zugeordnet und weiterhin so mit einer Schaltvorrichtung (4) verbunden ist, daß der Ausgang des Oszillators moduliert wird.

6. Sender/Empfänger-Schaltkreispaar nach einem der vorhergehenden Ansprüche, **dadurch gekennzeichnet**, daß der Parallel-Resonanzkreis (7, 8) einen Abwärtstransformator (8) enthält, dessen Sekundärseite in Serie mit dem Serien-Resonanzkreis ($C_1$, $L_1$) des Empfangsteils geschaltet ist.

## Revendications

1. Paire de circuits émetteur/récepteur pour la transmission par lignes de transport d'énergie, la section d'émission comprenant un circuit dans lequel le signal de sortie d'un oscillateur à ondes sinusoïdales (1) est envoyé à une ligne de distribution à travers un circuit résonnant série (9,10), après avoir traversé un transformateur abaisseur (8), dans lequel un interrupteur (2) commandé par un optocoupleur est connecté de manière à recevoir et à commander l'application dudit signal de sortie, un moyen de commande d'interrupteur (3,4, commande MARCHE-ARRET) étant prévu pour fournir un signal de commande d'interrupteur audit interrupteur (2), et dans lequel, après avoir traversé l'interrupteur (2) commandé par l'optocoupleur et avant d'être envoyé au transformateur abaisseur (8), le siganl de sortie de l'oscillateur à ondes sinusoïdales est envoyé à un émetteur suiveur (5) qui est électriquement isolé, par l'interrupteur commandé par optocoupleur, du moyen de commande d'interrupteur tandis que la section de réception comprend un détecteur de niveau (16), un amplificateur (15) et un circuit de filtrage (14), dans lequel le signal délivré par la ligne de distribution est envoyé à un circuit résonnant parallèle $(L_2,C_2)$ sur lequel une première résistance $(R_2)$ est branchée en parallèle, après avoir traversé un circuit résonnant série $(L_1, C_1)$ auquel une seconde résistance $(R_1)$ est connectée en série, les résistances réalisant une adaptation du filtre (14) à l'impédance de sortie de la ligne de transport d'énergie et à l'impédance d'entrée de l'amplificateur (15), et les fréquences centrales respectives des circuits résonnants de la section de réception étant sensiblement identiques.

2. Paire de circuits émetteur/récepteur selon la revendication 1, dans lequel le circuit résonnant série et le circuit résonnant parallèle de ladite section de réception obéissent à la relation :

$$C_1 L_1 = C_2 L_2,$$

$L_1$ et $L_2$ étant les inductances respectives du circuit résonnant série et du circuit résonnant parallèle, et $C_1$ et $C_2$ étant les capacités respectives du circuit résonnant série et du circuit résonnant parallèle.

3. Paire de circuits émetteur/récepteur selon la revendication 1 ou la revendication 2, dans lequel ledit optocoupleur (2) comprend un transistor FET branché en série entre la base dudit émetteur suiveur (5,6) et ledit oscillateur (1), des moyens supplémentaires de commutation (4) étant accouplés à une photodiode dudit optocoupleur et étant alors conçus pour moduler le signal de sortie dudit oscillateur.

4. Paire de circuits émetteur/récepteur selon la revendication 1 ou la revendication 2, dans lequel ledit optocoupleur (2) comprend un couple de phototransistors bipolaires (PT) en montage anti-parallèle, connecté en série entre ledit oscillateur (1) et la base dudit émetteur suiveur (5,6), des photodiodes respectives associées auxdits phototransistors étant accouplées à des moyens supplémentaires de commutation (4) qui sont conçus pour moduler le signal de sortie dudit oscillateur.

5. Paire de circuits émetteur/récepteur selon la revendication 1 ou la revendication 2, dans lequel ledit optocoupleur (2) comprend une résistance photosensible branchée en série entre ledit oscillateur et la base dudit émetteur suiveur (5,6), une photodiode étant associée à ladite résistance photosensible et connectée à des moyens supplémentaires de commutation (4) qui sont conçus pour moduler le signal de sortie dudit oscillateur.

6. Paire de circuits émetteur/récepteur selon l'une quelconque des revendications précédentes, dans lequel ledit circuit résonnant parallèle (7,8) comprend un transformateur abaisseur (3), dont le secondaire est branché en série avec le circuit résonnant série $(C_1,L_1)$ de ladite section de réception.

EP 0 111 604 B2

FIG. 1

FIG. 2

FIG.3 (a)

FIG.3 ( b)

6

FIG. 4

FIG. 5

FIG. 6